# EUROPEAN PATENT APPLICATION

(11) **EP 1 906 372 A2**
(43) Date of publication of application: **02.04.2008**
(21) Application number: 07011163.8
(22) Date of filing: 06.06.2007
(51) Int. Cl.: G08C 17/00

(54) **Electronic device having identifier**

(30) Priority: 29.09.2006 JP 2006266343
(71) Applicant: Hitachi, Ltd., Chiyoda-ku Tokyo 100-8280 (JP)
(72) Inventor: Ishihara, Osamu, Tokyo 100-8220 (JP); Fukushima, Shinichirou, Tokyo 100-8220 (JP); Kobayashi, Yuichi, Tokyo 100-8220 (JP)
(74) Representative: Strehl Schübel-Hopf & Partner

(57) **Abstract**

An electronic device system has an electronic device (200) including at least one pair of an identifier (201a, 201b) and validity flag (202a, 202b). Identifier information (2012) and condition (2013) are registered into the identifier (201a, 201b) within the electronic device (200). When an access is made to the electronic device (200) using an ordinary command, no response will be made since the validity flag (202a, 202b) is "irresponsive". An identifier (5013) is transmitted to the electronic device (200) using an identifier control command and if the condition is satisfied, the validity flag (202a, 202b) is set to be "responsive", and thus operation to the electronic device (200) becomes executable hereinafter. If the condition is not satisfied, the validity flag (202a, 202b) is set to be "irresponsive", and thus no response will be made by the electronic device (200).

## Description

### BACKGROUND OF THE INVENTION

### Field of the Invention

The present invention relates to a wireless communications system using electronic devices (in particular, electronic tags), a control method therefor, and an apparatus for performing communications with the electronic devices (electronic tags).

### Description of the Related Art

In a wireless communications system using electronic devices (in particular, electronic tags), an operation can be performed from an interrogator to a plurality of electronic devices. In particular, it is possible to read values within the electronic devices by making an inquiry from the interrogator to the electronic tags with the use of wireless communications. This fact makes it effective to enhance security by describing such information as commodity-management information into the electronic devices. At present, specification of the electronic devices has been standardized with an intention of being applied to such activities as international commodity distribution. Accordingly, it is becoming more and more important for the interrogator to be able to access the electronic devices of the same standardization by using the standardized protocol.

On account of this standardization, even when the electronic devices of many different usages (such as commodity-distribution tags, membership cards, and entrance tickets) exist within one and the same electric field, the interrogator eventually finds it possible to access all the electronic devices. Concerning this point, the description has been given in a proposal material to ISO/IEC18000-6 Type C, i.e., "Hibiki Proposal to ISO/IEC18000-6 Type C January 24, 2005".

### SUMMARY OF THE INVENTION

In the present situation, all the electronic devices of the same standardization are accessible from the interrogator. As a result, it turns out that existence of all the electronic devices themselves becomes obviously exposed. Accordingly, it is impossible to ensure sufficient security.

Namely, a problem to be solved is that,when an access is made using the standardized protocol, the existence of each electronic device also becomes recognizable. Consequently, an object to be accomplished is to implement that, even if the access is made using the standardized protocol, the existence of each electronic device itself will become concealable.

The most fundamental feature of the present invention is as follows: Namely, an identifier and a validity flag are installed on each electronic device. Then, if an identifier in a command coincide with the identifier of the electronic device, the validity flag is set to be "responsive", then making responses. Meanwhile, if the identifier in the command does not coincide with the identifier of the electronic device, the validity flag is set to be "irresponsive", thereby making it possible to conceal even the existence of each electronic device.

When the electronic devices of the present invention, each of which includes an identifier, are used for various usages such as commodity-distribution tags, membership cards, and entrance tickets, an invalidation processing for invalidating the electronic devices becomes necessary after the electronic devices have been used. In the conventional technology, with respect to the electronic devices after being used, the invalidation for the electronic devices themselves becomes necessary through initialization of data or kill. Employment of the present countermeasure, however, prevents the electronic device from operating as the electronic device unless the identifier coincide with the identifier of the command. This fact permits omission of the invalidation processing if necessary.

As an example of concrete uses of the electronic devices, there exists the following example where the electronic devices are applied to entrance tickets. In the case of the use as the entrance tickets, a date and an attraction name (code) are set into each of a plurality of identifiers in advance. On a day when the date does not coincide with the day, the electronic devices will make no response. Accordingly, the electronic devices cannot be used as the entrance tickets. On the other hand, on a day when the date coincides with the day, and when the attraction name coincides with the one on the day, it becomes possible to read information out of the electronic devices.
This makes the electronic devices available as the entrance tickets and attraction use tickets. Also, in the case of the use as electronic tags of ordinary commodity-distribution usage, a specific set value is set into each identifier in advance. This setting makes it possible to set initial values of the validity flags to be "responsive", thereby making the electronic devices (electronic tags) accessible without making an inquiry about each identifier from the interrogator. Also, the above-described date and attraction name (code) are encrypted, thereby being transformed into data of a certain extent of length. This processing allows implementation of a further enhancement in the security.

By applying the present invention in this way, it becomes possible to extend utilization range of the electronic devices.

Other objects, features and advantages of the invention will become apparent from the following description of the embodiments of the invention taken in conjunction with the accompanying drawings.

### BRIEF DESCRIPTION OF THE DRAWINGS

Fig. 1 is an entire configuration diagram of electronic devices, each of which includes an identifier, and interrogators;
Fig. 2 is a configuration diagram of the electronic device including an identifier;
Fig. 3 is a format example of the identifier;
Fig. 4 is a format of an identifier control command; and
Fig. 5 is a flowchart in a judgment unit.

### DESCRIPTION OF THE EMBODIMENTS

A value on each usage basis is set into the identifier of each electronic device. Except for the case of each usage, this setting makes it possible to prevent each electronic device from operating as an electronic device. As a result, each electronic device itself can be concealed.

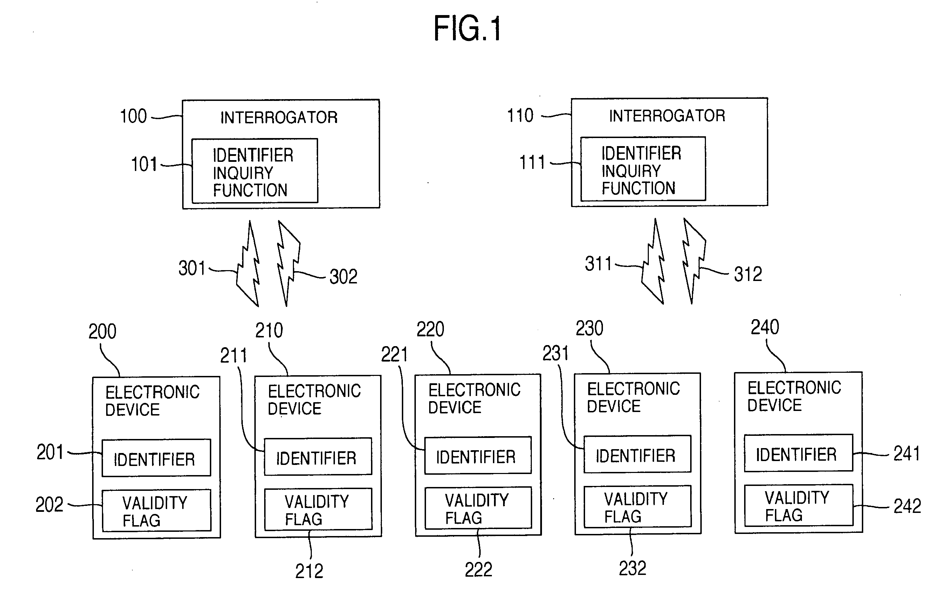

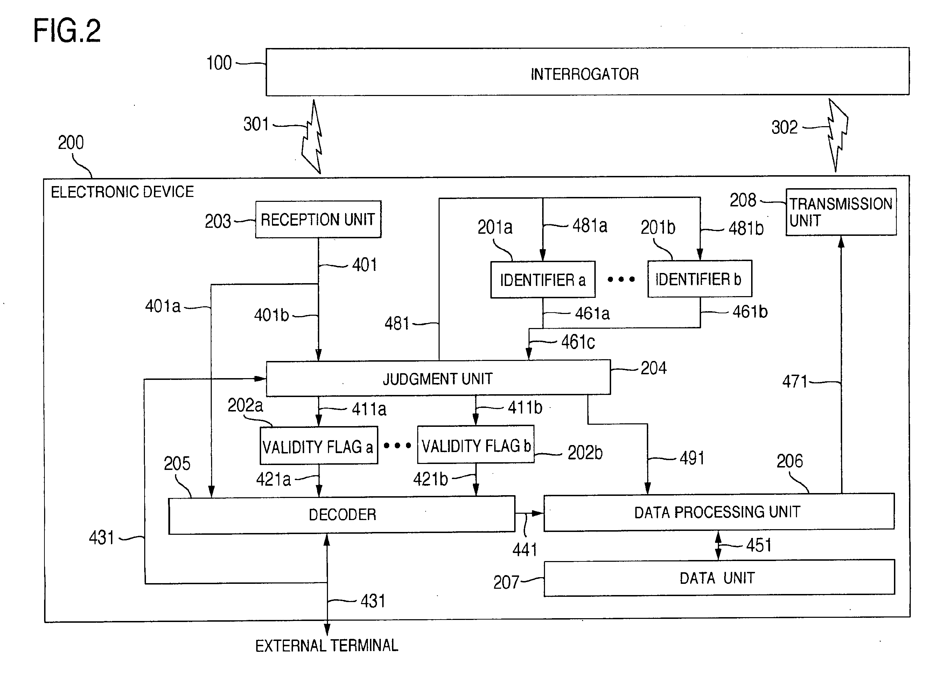

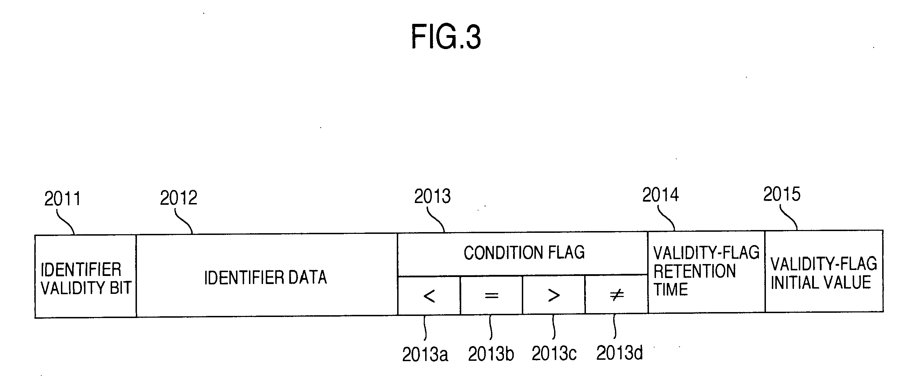

Fig. 1 is an entire configuration diagram of electronic devices, each of which includes an identifier, and interrogators. The interrogators (100, 110) have identifier inquiry functions (101, 111), and are capable of transmitting commands to the electronic devices via communications paths (301, 311). Also, the interrogators (100, 110) are capable of receiving information from the electronic devices via communications paths (302, 312). The electronic devices (200, 210, 220, 230, 240) install therein identifiers (201, 211, 221, 231, 241) and validity flags (202, 212, 222, 232, 242). Fig. 2 is a detailed configuration diagram of the electronic device. Fig. 2 is the detailed configuration diagram of the one unit of interrogator (100) and the one unit of electronic device (200). Fig. 3 illustrates a format example of the identifier. Identifier validity bit (2011) is information for indicating that setting of the identifier is valid. Identifier data (2012) stores therein identifier information. Condition flag (2013) indicates the following comparison conditions between the identifier data (2012) and "identifier" received as "identifier control command": condition flag (2013a): the received "identifier" < the identifier data (2012), condition flag (2013b): the received "identifier" = the identifier data (2012), condition flag (2013c): the received "identifier" > the identifier data (2012), condition flag (2013d): the received "identifier" ≠ the identifier data (2012), (≠: not equal).

Validity-flag retention time (2014) specifies retention time of the validity flag which elapses from shutoff of the power-feeding to the electronic device. Validity-flag initial value (2015) is a flag for specifying "responsive" or "irresponsive" as an initial value of the validity flag when the power is fed to the electronic device.

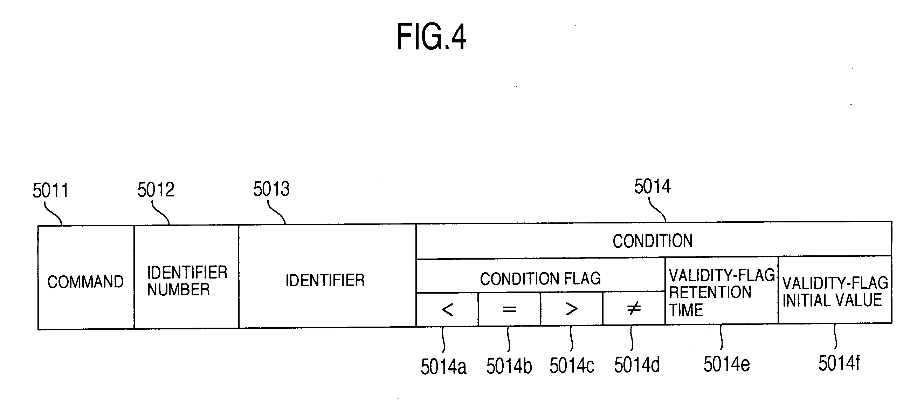

Fig. 4 illustrates a format of the identifier control command. Command (5011) supports the following instructions:
a) identifier comparison instruction: an instruction of making a condition judgment between identifier (5013) to be transmitted as the identifier control command and the identifier (201a, 201b) within the electronic device, and modifying the validity flag (202a, 202b).
b) identifier rewrite instruction: an instruction of rewriting the in-electronic-device identifier (201a, 201b) indicated by the identifier number (5012) of the identifier control command into contents the identifier (5013) and the condition (5014) of the identifier control command.

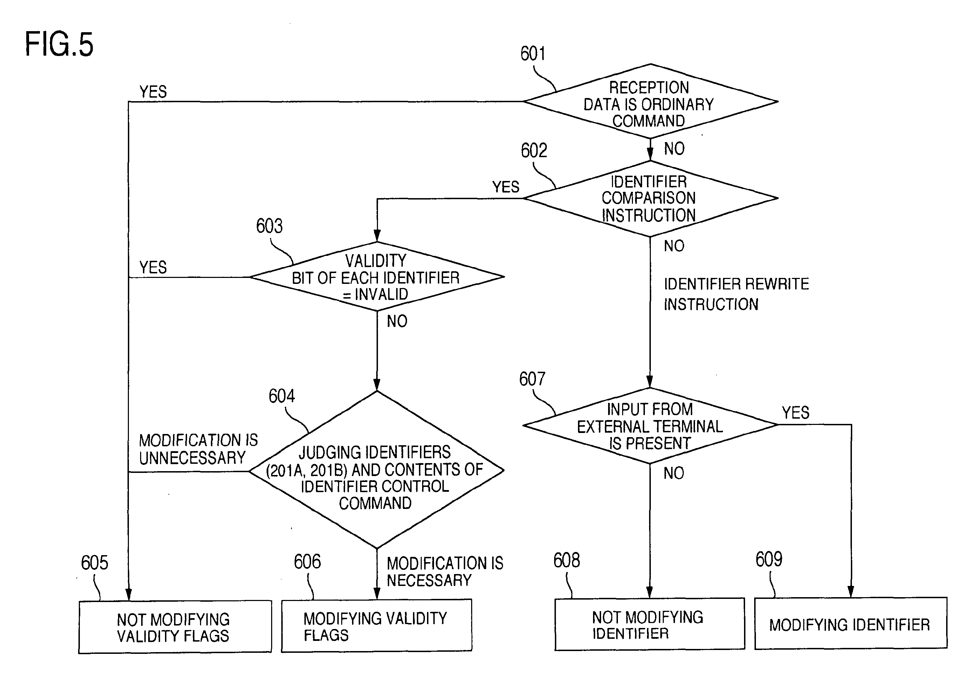

Fig. 5 illustrates a flowchart in the judgment unit (204).

Hereinafter, referring to Fig. 2, the explanation will be given below concerning an "ordinary command (read)" operation as the ordinary electronic tag.

In order to use the electronic device as the ordinary electronic tag, as illustrated below, setting of the identifier: the identifier validity bit (2011) = invalid is performed into the identifiers (201a, 201b) in advance.

| | |
|---|---|
| identifier validity bit (2011) | = invalid |
| identifier data (2012) | = arbitrary value |
| condition flag "<" (2013a) | = invalid |

| (smaller than) | |
|---|---|
| condition flag "=" (2013b) | = invalid |
| condition flag ">" (2013c) | = invalid |

| (larger than) | |
|---|---|
| condition flag "≠" (2013d) | = invalid |
| validity-flag retention time (2014) | = 0 second |
| validity-flag initial value (2015) | = valid |

Because of the identifier: the identifier validity bit (2011) = invalid, the identifier of the electronic device becomes invalid. As a result, the electronic device turns out to behave like the ordinary electronic tag which includes no identifier.

When the power is fed to the electronic device (200), the identifiers (201a, 201b) are transferred to the judgment unit (204) from 461a, 461b by way of 461c. From the transferred identifier information (the identifier: the identifier validity bit = invalid), the judgment unit (204) sets the validity flags (202a, 202b) to be "responsive" via 411a, 411b.

To the electronic device (200) to which the power is being fed, the interrogator (100) transmits the "ordinary command (read)" via the communications path (301). The reception unit (203) of the electronic device (200) receives the "ordinary command (read)". Moreover, the unit (203) transfers, as reception data, the "ordinary command (read)" to the judgment unit (204) via 401 and by way of 401b, and also to the decoder (205) by way of 401a. Since the reception data is the "ordinary command", the judgment unit (204) does not perform modification of the validity flags (202a, 202b) in accordance with the flowchart in Fig. 5.
Since the validity flags (202a, 202b) are "responsive", the decoder (205) decodes the transferred "ordinary command (read)", then transferring the decoded result to the data processing unit (206) via 441. The data processing unit (206) informs the data unit (207) of a read instruction, i.e., the decoded result, via 451. Furthermore, the unit (206) fetches necessary information from the data unit (207) via 451, then transferring the necessary information to the transmission unit (208) via 471. The transmission unit (208) transmits the read data to the interrogator (100) via the communications path (302).

To the electronic device (200) to which the power is being fed, the interrogator (100) transmits the "identifier control command (identifier comparison instruction)" via the communications path (301). The reception unit (203) of the electronic device (200) receives the "identifier control command (identifier comparison instruction)". Moreover, the unit (203) transfers, as reception data, the "identifier control command (identifier comparison instruction)" to the judgment unit (204) via 401 and by way of 401b, and also to the decoder (205) by way of 401a. Since the identifier validity bit of each of the identifiers (201a, 201b) is set to be invalid, the judgment unit (204) does not perform modification of the validity flags (202a, 202b) in accordance with the flowchart in Fig. 5. Because of the "identifier control command", the decoder (205) halts the decoding, thereby completing the operation.

Hereinafter, the explanation will be given below concerning an embodiment in the case where a time duration is set by using the two identifiers (201a, 201b). In accordance with the identifier format in Fig. 3, a starting day is set into the identifier a (201a) in advance.

| | |
|---|---|
| identifier validity bit (2011) | = valid |
| identifier data (2012) | = 20060801 |
| condition flag "<" (2013a) | = invalid |

| (smaller than) | |
|---|---|
| condition flag "=" (2013b) | = valid |
| condition flag ">" (2013c) | = valid |

| (larger than) | |
|---|---|
| condition flag "≠" (2013d) | = invalid |
| validity-flag retention time (2014) | = 1 second |
| validity-flag initial value (2015) | = invalid |

Also, in accordance with the identifier format in Fig. 3, a termination day is set into the identifier b (201b) in advance.

| | |
|---|---|
| identifier validity bit (2011) | = valid |
| identifier data (2012) | = 20060831 |
| condition flag "<" (2013a) | = valid |

| (smaller than) | |
|---|---|
| condition flag "=" (2013b) | = valid |
| condition flag ">" (2013c) | = invalid |

| (larger than) | |
|---|---|
| condition flag "≠" (2013d) | = invalid |
| validity-flag retention time (2014) | = 1 second |
| validity-flag initial value (2015) | = invalid |

When power is fed to the electronic device (200), the identifier information on the identifiers (201a, 201b) are transferred to the judgment unit (204) from 461a, 461b by way of 461c. From the transferred identifier information, the judgment unit (204) sets the validity flags (202a, 202b) to be "irresponsive" as their initial values via 411a, 411b.

To the electronic device (200) to which the power is being fed, the interrogator (100) transmits the "ordinary command (read)" via the communications path (301). The reception unit (203) of the electronic device (200) receives the "ordinary inquiry (read)". Moreover, the unit (203) transfers this reception data to the judgment unit (204) via 401 and by way of 401b, and also to the decoder (205) by way of 401a. Since the reception data is the "ordinary command" as the electronic device, the judgment unit (204) does not perform modification of the validity flags (202a, 202b) in accordance with the flowchart in Fig. 5. Since the validity flags (202a, 202b) are "irresponsive", the decoder (205) halts decoding of the transferred "ordinary command (read)", thus neglecting the "ordinary command" which the decoder (205) has received. Namely, it is decided that the processing here is a processing similar to a case of having not received the command. On account of this, the transmission unit (208) is allowed to issue no response.

To the electronic device (200) to which the power is being fed, the interrogator (100) transmits the "identifier control command" via the communications path (301) in the following setting:
identifier control command: command (5011) : identifier comparison instruction
identifier control command: identifier number (5012) : identifier a, identifier b
identifier control command: identifier (5013): 20060815
identifier control command: condition (5014): none

The reception unit (203) of the electronic device (200) receives the"identifier control command". Moreover, the unit (203) transfers this reception data to the judgment unit (204) via 401 and by way of 401b, and also to the decoder (205) by way of 401a. In the judgment unit (204), it can be judged that the condition is satisfied from the contents of the"identifier control command" and the identifier a (201a). Accordingly, the validity flag a (202a) is set to be "responsive".
identifier control command: identifier (5013): 20060815
identifier a (201a): 20060801
condition: ">" larger than

Also, at this time, it can be judged that the condition is satisfied from the contents of the"identifier control command" and the identifier b (201b). Accordingly, the validity flag b (202b) is set to be "responsive".
identifier control command: identifier (5013): 20060815
identifier b (201b): 20060831
condition: "<" smaller than

Because of the "identifier control command", the decoder (205) halts the decoding, thereby completing the operation. While the power-feeding to the electronic device is continued, state of the electronic device becomes a one where the values of the validity flags (202a, 202b) whose settings are modified continue to be retained. In this state, the "ordinary command (read)" is transmitted from the interrogator (100). The reception unit (203) of the electronic device (200) receives the "ordinary command (read)". Moreover, the unit (203) transfers, as reception data, the "ordinary command (read)" to the judgment unit (204) via 401 and by way of 401b, and also to the decoder (205) by way of 401a. Since the reception data is the "ordinary command", the judgment unit (204) does not perform modification of the validity flags (202a, 202b) in accordance with the flowchart in Fig. 5.
Since the validity flags (202a, 202b) are "responsive", the decoder (205) decodes the transferred "ordinary command (read)", then transferring the decoded result to the data processing unit (206) via 441. The data processing unit (206) informs the data unit (207) of a read instruction, i.e., the decoded result, via 451. Furthermore, the unit (206) fetches necessary information from the data unit (207) via 451, then transferring the necessary information to the transmission unit (208) via 471. The transmission unit (208) transmits the read data to the interrogator (100) via the communications path (302).

After the power-feeding to the electronic device is shut off, when a sufficient time has elapsed in accordance with the setting of the validity-flag retention time (2014) of the identifiers (201a, 201b), the retention of the validity flags (202a, 202b) is completed. After that, if power is fed to the electronic device (200) again, an initial value "irresponsive" is set into the validity flags (202a, 202b) in accordance with the validity-flag initial value (2015) of the identifiers (201a, 201b).

In a case where the present electronic device (200) is used after the validity-flag retention time has already elapsed, when an access is made with the "ordinary command" from the interrogator (100), this access is neglected (i.e., is dealt with in a manner similar to a case where no access has been made) since the validity flags (202a, 202b) are "irresponsive". As a result, existence of the electronic device (200) becomes unrecognizable from the interrogator (100). Also, the following data is transmitted from the interrogator (100) as the "identifier control command":
identifier control command: command (5011): identifier comparison instruction
identifier control command: identifier number (5012): nothing
identifier control command: identifier (5013): 20061001
identifier control command: condition (5014): none

The reception unit (203) of the electronic device (200) receives the"identifier control command". Moreover, the unit (203) transfers this reception data to the judgment unit (204) via 401 and by way of 401b, and also to the decoder (205) by way of 401a. In the judgment unit (204), the condition holds from the contents of the"identifier control command" and the identifier a (201a). Accordingly, the validity flag a (202a) is set to be "responsive".
identifier control command: identifier (5013): 20061001
identifier a (201a): 20060801
condition: ">" larger than

The condition, however, does not hold from the contents of the"identifier control command" and the identifier b (201b). Accordingly, the validity flag b (202b) is set to be "irresponsive".
identifier control command: identifier (5013): 20061001
identifier b (201b): 20060831
condition: "<" smaller than

Consequently, when an access is made continuously with the "ordinary command" from the interrogator (100), this access is neglected since at least one of (or one of) the validity flags (202a, 202b) is "irresponsive". As a result, the existence of the electronic device (200) becomes unrecognizable from the interrogator (100). Namely, it turns out that the electronic device (200) can not be recognized by the interrogator (100).

Next, the explanation will be given below concerning an operation in a case where the external terminal (431) illustrated in Fig. 2 is used. specification of the external terminal (431) input is absent : The validity flags (202a, 202b) are set in accordance with the identifiers (201a, 201b). writing into the identifiers (201a, 201b) is disabled input is present : The validity flags (202a, 202b) are (forcefully) set to be "responsive" independently of the identifiers (201a, 201b). writing into the identifiers (201a, 201b) is enabled

Based on the input signal from the external terminal (431), the judgment unit (204) suppresses values of the identifier: the validity-flag initial value (2015) of the identifiers (201a, 201b), thereby being capable of forcefully setting initial values of the validity flags (202a, 202b) to be "responsive". Also, simultaneously, based on the input signal from the external terminal (431), the decoder (205) is capable of forcefully setting values of the validity flags (202a, 202b) to be "responsive" which are inputted by way of 421a, 421b.

The signal is inputted from the external terminal (431) into the electronic device (200) to which the power is being fed. This input forcefully sets the validity flags (202a, 202b) to be "responsive". To the electronic device (200) in this responsive state, the interrogator (100) transmits the "ordinary command" via the communications path (301). This transmission allows implementation of such processings as data read/write from/into the electronic device (200).

Also, the signal is inputted from the external terminal (431) into the electronic device (200) to which the power is being fed. This input also allows implementation of the data write into the identifiers (201a, 201b) from the judgment unit (204) via 481. The interrogator (100) transmits the "identifier control command"via the communications path (301) in the following setting:
identifier control command: command (5011) : identifier rewrite instruction
identifier control command: identifier number (5012): identifier a
identifier control command: identifier (5013): oooo
identifier control command: condition (5014): condition flag, and validity-flag retention time, and validity-flag initial value

The reception unit (203) of the electronic device (200) receives the"identifier control command". Moreover, the unit (203) transfers this reception data to the judgment unit (204) via 401 and by way of 401b, and also to the decoder (205) by way of 401a. In the judgment unit (204), in accordance with the flowchart in Fig. 5, it is judged that rewriting the identifiers is enabled. Then, from the specified identifier control command: identifier number (5012) = the identifier a, the contents of the identifier a (201a) can be rewritten via 481, 481a.

According to the above-described embodiment, the existence of each electronic device is unrecognizable unless the identifier of the electronic device coincides with the identifier of the command.
As a result, it becomes possible to extend utilization range of each electronic device. For example, the security is improved, and the invalidation processing for invalidating an electronic device which is not used any longer becomes unnecessary.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An electronic device system, comprising:
a plurality of electronic devices (200, 210, 220, 230, 240) each having an identifier (201, 211, 221, 231, 241), and
a plurality of interrogators (100, 110) each having an identifier control command function over said electronic devices (200, 210, 220, 230, 240), wherein
each of said electronic devices (200, 210, 220, 230, 240) comprises:
means (207) for storing said identifier (201, 211, 221, 231, 241) and a validity flag (202, 212, 222, 232, 242);
means (204) for setting value of said validity flag (202, 212, 222, 232, 242) in accordance with contents of an identifier control command from one of said interrogators (100, 110) and a value of said identifier (201, 211, 221, 231, 241) stored within said electronic device (200, 210, 220, 230, 240), and
means (206) for controlling a response to said identifier control command and an ordinary command from said interrogator (100, 110) in accordance with said value of said validity flag (202, 212, 222, 232, 242).

2. The electronic device system according to Claim 1, wherein, when said validity flag (202, 212, 222, 232, 242) of said electronic device (200, 210, 220, 230, 240) is "irresponsive" to said ordinary command,
said response controlling means (206) suppresses control over said ordinary command from said interrogator (100, 110).

3. The electronic device system according to Claim 1, wherein, when said validity flag (202, 212, 222, 232, 242) of said electronic device (200, 210, 220, 230, 240) is "irresponsive" to said identifier control command,
said response controlling means (206) suppresses control over said identifier control command from said interrogator (100, 110).

4. The electronic device system according to Claim 1, wherein, when said validity flag (202, 212, 222, 232, 242) of said electronic device (200, 210, 220, 230, 240) is "responsive" to said ordinary command,
said response controlling means (206) controls said electronic device so that said electronic device operates in accordance with said contents of said identifier control command with respect to said ordinary command from said interrogator (100, 110).

5. The electronic device system according to Claim 1, wherein, when said validity flag (202, 212, 222, 232, 242) of said electronic device (200, 210, 220, 230, 240) is "responsive" to said identifier control command,
said response controlling means (206) controls said electronic device so that said electronic device operates in accordance with contents of notification/inquiry with respect to said identifier control command from said interrogator (100, 110).

6. The electronic device system according to Claim 1, wherein
each interrogator (100, 110) having identifier inquiry function (101, 111) transmits, as said identifier control command, an identifier (201, 211, 221, 231, 241) to said electronic device (200, 210, 220, 230, 240), and
said electronic device makes comparison between contents of said identifier (201, 211, 221, 231, 241) transmitted by said interrogator and said value being set in said identifier (201, 211, 221, 231, 241) within said electronic device (200, 210, 220, 230, 240), and modifies said validity flag (202, 212, 222, 232, 242) into "responsive" or "irresponsive".

7. The electronic device system according to Claim 1, wherein
each of said electronic devices (200, 210, 220, 230, 240) stores more than one identifiers (201a, 201b),
an arbitrary value being settable into said identifiers (201a, 201b) within said electronic device (200, 210, 220, 230, 240), said arbitrary value specifying a validity-flag initial value (2015) which is set after power has been fed to said electronic device (200, 210, 220, 230, 240).

8. The electronic device system according to Claim 7, wherein
said electronic device (200, 210, 220, 230, 240) stores more than one validity flags (202a, 202b) and information on "responsive" or "irresponsive", and
said response controlling means (206) of said electronic device (200, 210, 220, 230, 240) responds to said identifier control command and said ordinary command from said interrogator (100, 110) in accordance with said setting of said validity flags (202a, 202b).

9. The electronic device system according to Claim 7, wherein
said electronic device (200, 210, 220, 230, 240) further comprises
means for storing said identifiers (201, 211, 221, 231, 241) and said validity flags (202, 212, 222, 232, 242) as fixed pairs, and setting and retaining validity flags for the paired identifiers.

10. The electronic device system according to Claim 1, wherein
said validity flag (202, 212, 222, 232, 242) of said electronic device (200, 210, 220, 230, 240) retains said value during a specific time after power-feeding to each of said electronic device (200, 210, 220, 230, 240) has been shut off.

11. The electronic device system according to Claim 1, wherein
said electronic device (200, 210, 220, 230, 240) comprises at least one external input terminal (431),
said validity flag (202, 212, 222, 232, 242) being modified into a state of being "responsive" or "irresponsive" by being input with a signal from said external input terminal (431).

12. An electronic device control method using an electronic device system including:
a plurality of electronic devices (200, 210, 220, 230, 240) each having identifier (201, 211, 221, 231, 241), and
a plurality of interrogators (100, 110) each having an identifier control command function over said electronic devices (200, 210, 220, 230, 240), wherein
each electronic device (200, 210, 220, 230, 240) executes the steps of:
storing said identifier (201, 211, 221, 231, 241) and a validity flag (202, 212, 222, 232, 242) into said electronic device (200, 210, 220, 230, 240),
setting a value of said validity flag (202, 212, 222, 232, 242) in accordance with contents of an identifier control command from said interrogator (100, 110) and said value set in said identifier (201, 211, 221, 231, 241) within said electronic device (200, 210, 220, 230, 240), and
controlling a response to said identifier control command and an ordinary command from said interrogator (100, 110) in accordance with said value of said validity flag (202, 212, 222, 232, 242).

13. The electronic device control method according to Claim 12, wherein, when said validity flag (202, 212, 222, 232, 242) of said electronic device (200, 210, 220, 230, 240) is "irresponsive" to said ordinary command, said response controlling step suppresses control over said ordinary command from said interrogator (100, 110).

14. The electronic device control method according to Claim 12, wherein, when said validity flag (202, 212, 222, 232, 242) of said electronic device (200, 210, 220, 230, 240) is "irresponsive" to said identifier control command, said response controlling step suppresses control over said identifier control command from said interrogator (100, 110).

15. The electronic device control method according to Claim 12, wherein, when said validity flag (202, 212, 222, 232, 242) of said electronic device (200, 210, 220, 230, 240) is "responsive" to said ordinary command, said response controlling step controls said electronic device so that said electronic device operates in accordance with said contents of said identifier control command with respect to said ordinary command from said interrogator (100, 110).

16. The electronic device control method according to Claim 12, wherein, when said validity flag (202, 212, 222, 232, 242) of said electronic device (200, 210, 220, 230, 240) is "responsive" to said identifier control command,
said response controlling step controls said electronic device so that said electronic device operates in accordance with contents of notification/inquiry with respect to said identifier control command from said interrogator (100, 110).

17. The electronic device control method according to Claim 12, wherein
said interrogator (100, 110) has an identifier inquiry function (101, 111), the method further comprising the steps of:
transmitting, as said identifier control command, an identifier (201, 211, 221, 231, 241) to said electronic device (200, 210, 220, 230, 240) by said identifier inquiry function, and
making comparison between contents of said identifier (201, 211, 221, 231, 241) transmitted from said interrogator and said value set in said identifier (201, 211, 221, 231, 241) within said electronic device (200, 210, 220, 230, 240), and modifying said validity flag (202, 212, 222, 232, 242) into "responsive" or "irresponsive" by said electronic device.

18. The electronic device control method according to Claim 12, wherein
said electronic device (200, 210, 220, 230, 240) further executes a step of storing more than one identifiers (201a, 201b), an arbitrary value being settable into said identifiers (201a, 201b), said arbitrary value specifying a validity-flag initial value (2015) which is set after power has been fed to said electronic device (200, 210, 220, 230, 240).

19. The electronic device control method according to Claim 12, wherein
said electronic device (200, 210, 220, 230, 240) further executes a step of storing more than one validity flags (202a, 202b) and information on "responsive" or "irresponsive", and
in said response controlling step, said electronic devices (200, 210, 220, 230, 240) responds to said identifier control command and said ordinary command from said interrogator (100, 110) in accordance with said setting of said validity flags (202a, 202b).

20. The electronic device control method according to Claim 12, wherein
said validity flag (202, 212, 222, 232, 242) retains said value during a specific time after power-feeding to said electronic device (200, 210, 220, 230, 240) has been shut off.

21. The electronic device control method according to Claim 12, wherein
said electronic device (200, 210, 220, 230, 240) comprises at least one external input terminal (431),
said control method further comprising a step of modifying said validity flag (202, 212, 222, 232, 242) into a state of being "responsive" or "irresponsive" by being input with a signal from said external input terminal (431).
